# EUROPEAN PATENT SPECIFICATION

(11) **EP 3 786 353 B1**
(45) Date of publication and mention of the grant of the patent: **14.01.2026**
(21) Application number: 20193993.1
(22) Date of filing: 02.09.2020
(51) Int. Cl.: D06N 7/00, B29B 17/00, B29B 17/04

(54) **PROCEDURE FOR RECYCLING A TEXTILE PRODUCT**
VERFAHREN ZUM RECYCLING EINES TEXTILPRODUKTS
PROCÉDURE POUR RECYCLER UN PRODUIT TEXTILE

(30) Priority: 02.09.2019 BE 201905577
(43) Date of publication of application: 03.03.2021
(73) Proprietor: C-RM Industries BVBA, 8870 Izegem (BE)
(72) Inventor: Degandt, Pieter-Jan, 8870 Izegem (BE)
(74) Representative: De Clercq & Partners

(56) References cited:
- EP-A2- 0 891 848
- WO-A2-99/40250
- BE-A6- 1 017 052
- DE-A1- 19 715 418
- FR-A1- 3 011 501

## Description

### TECHNICAL FIELD

The invention relates to a method for manufacturing an article, preferably a textile product, in particular a textile floor covering and also to the resulting textile product, in particular the resulting textile floor covering.

### TECHNOLOGICAL BACKGROUND OF THE INVENTION

Textile-based floor coverings, such as carpets, rugs or mats, comprise products which usually consist of a top layer, optionally a middle layer and an end or base layer. The top layer is usually a woven or tufted textile fabric. The middle layer (or primary backing) is usually an intermediate fabric which for example provides additional stability to the product, ensures bonding of the fibres, etc. The end or bottom layer (or secondary backing) is the final back face which offers properties, such as e.g. anti-slip, bonding, weight, etc.

Typically, each of these layers is composed of different materials in order to achieve the desired properties for each layer. Thus, different waste streams are created, such as shearing dust, edge trimmings, discarded finished products and the like, which renders waste processing and recycling of such products more difficult. After all, the aim is always to dissect the products in order ultimately to obtain the pure polymers (such as e.g. PA, PP, PES, etc.) and/or the natural fibres (such as e.g. coconut, cotton, etc.) and render these suitable for re-use. Such re-use and recycling is also rendered more difficult as a result of the variations in composition, colour and properties of the waste products. Consequently, the waste-processing processes of textile-based floor coverings require considerable investments and intrinsically have a large ecological footprint (inter alia regarding water and energy consumption and water or environmental pollution). However, in many cases it is not even possible to separate the various polymers, such as a textile product/floor covering consisting of PA (polyamide) yarn with PP (polypropylene) primary backing and a latex back face. A large part of the waste is thus burnt, resulting in the associated CO₂ emissions.

EP 0 891 848 A2 relates to a process for recycling waste polymeric material (15), the process comprising the steps of: a) chopping (20) a mixture of waste polymeric material wherein the waste polymeric material has about 0-40% aliphatic polyamide material; b) granulating the chopped mixture into fragments that are an order of magnitude smaller than the original size of the waste polymeric material; c) densifying (41) the granulated mixture into pelletized material (42); d) extruding (50) the pelletized material; 15 and e) forming (61) the extruded material (50) to provide an article of manufacture (66, 70, 90). DE 197 15 418 A1 relates to a method for the reprocessing of thermoset plastic products (I). (I) is formed from a cross-linkable copolymer consisting of unsaturated polyester, phenacryl(vinyl ester), polymethyl(acrylate)methacrylate, di(iso)allylphthalate and cross-linkable hydrocarbons.

WO 99/40250 A2 relates to a backing or an intermediate layer for a surface covering, which comprises a fused recycled material, wherein the material comprises a thermoplastic material, for instance, a vinyl material from a vinyl backed carpet or vinyl backed carpet manufacturing waste or both.

FR 3 011 501 A1 relates to a method for producing a motor vehicle floor mat, said method comprising the following successive steps: providing a complex to be recycled comprising a fibrous layer, the fibers of which are non-fusible below a temperature T2, and a backside fusible layer with a melting temperature T1 lower than T2; grinding said complex so as to obtain a ground material; produce from said ground material a mixture comprising at least 40% of said ground material, at least 20% of mineral filler and at least 30% of polyolefin; placing said mixture in an extrusion screw to bring it to a temperature above T1 and below T2; extruding the material obtained so as to obtain a backing layer; at the outlet of said die, calendering said backing layer directly against a sheet of textile, said sheet being devoid of an underlay for attaching the fibers, so as to obtain a new complex; cutting said complex into blanks, each of said blanks being intended to be shaped to make a carpet.

BE 1017 052 A6 relates to recyclable material that is comminuted, mixed together and added to an existing heavy-coating formulation (41) as a functional additive. A process for producing a heavy-coating formulation comprises the following steps: (A) collecting recyclable material; (B) comminuting the collected material into dosable pieces; (C) mixing the comminuted material; (D) adding the mixture to an existing heavy-coating formulation as a functional additive; and (E) homogenizing the formulation.

There is therefore a need for articles, for example textile products, in particular textile floor coverings which can be manufactured in a technically inexpensive, efficient and sustainable and ecological manner. In particular, there is a need for textile products, in particular textile floor coverings, which can readily be recycled, it being easily possible to reuse a large amount of the used materials and internal/external waste streams in the production process of new articles, such as textile products and textile floor coverings. There is furthermore a need to reduce the waste streams in the production of such floor coverings. Furthermore, there is a need for a textile product, in particular a textile floor covering, which comprises a large amount of recycled waste streams, but which is of the same high quality as a textile product or textile floor covering made without recycled waste streams. Above all, there is a need to reduce the ecological footprint of both existing and new textile products.

### SUMMARY

The invention and preferred embodiments thereof offer a solution to one or more of the abovementioned needs. The scope of the invention is limited to the claims appended hereto.

The present invention and/or preferred embodiments thereof provide a method for manufacturing a textile product, in particular a textile floor covering which can be manufactured in a technically inexpensive, efficient and sustainable manner. The present invention and/or preferred embodiments thereof provide a textile product, in particular textile floor covering, which consists of recycled material and furthermore of a limited number of raw materials and can easily be recycled as a result thereof. The present invention and/or preferred embodiments thereof provide the use of composite granules as specified herein as secondary backing material, which have perfectly equivalent or even better properties than a TPE-based (thermoplastic elastomer) reference backing material and/or other types of secondary backing materials, without recycled textile waste products, such as regarding pile adhesion, delamination, fibrebinding, ageing, emission of volatile organic compounds, cutting edge durability, dimensional stability and/or squareness. The composite granules as specified herein are also colourable as desired and are therefore not influenced, or are influenced to a lesser degree, by the colour of the waste products which are processed in the composite granules. The recipe of the composite granules can also easily be adapted to the type and amount of waste products which are being recycled.

According to a first aspect, the invention comprises a method for manufacturing a textile floor covering. The method comprises the steps:
a) providing or manufacturing composite granules; and,
b) manufacturing the textile floor covering, or a part of the textile floor covering, on the basis of the composite granules.
   The composite granules comprise a thermoplastic elastomer (TPE) and particles and/or fibre fragments, preferably fibre fragments. The particles and/or fibre fragments have a particle size of between 1 micron and 7.0 mm, preferably between 0.1 and 3.0 mm. The particles and/or fibre fragments comprise a thermoplastic synthetic material selected from the group of polyamides, polyesters or polyolefins, optionally in combination with TPE; and,
   wherein step a) comprises the following substeps, in this sequence:
      a1) providing a thermoplastic elastomer (TPE), preferably SEBS or SBS or a polyolefin, wherein the TPE is provided as granules comprising an oil, such as a mineral oil;
      a2) adding and mixing in chalk; and,
      a3) adding and mixing in the particles and/or fibre fragments, preferably fibre fragments.

In some preferred embodiments, the thermoplastic elastomer (TPE) comprises SEBS or SBS or a polyolefin.

In some preferred embodiments, step b) comprises manufacturing a secondary backing on one side of a fabric, preferably a textile floor covering, on the basis of the composite granules.

In some preferred embodiments, the particles and/or fibre fragments comprise comminuted or fragmented textile waste products or recycled textile material, such as shearing waste, tuft scraps, yarn scraps, edge trimmings, rejected textile products or rejected textile floor covering.

In some preferred embodiments, the composite granules are manufactured by compounding TPE and the particles and/or fibre fragments, in particular by means of an extrusion process.

In some preferred embodiments, the fibre fragments are fibres of polyamide, such as nylon, polyester, or polyolefins, such as PP, having a length of 1 micron to 7.0 mm, preferably having a length of 0.1 to 3 mm.

In some preferred embodiments, the method furthermore comprises the step of comminuting or fragmenting textile waste products before manufacturing the composite granules.

In some preferred embodiments, the textile product, preferably the textile floor covering, is a carpet, rug or mat, such as a wall-to-wall textile floor covering, a (large) rug, a bathroom mat, a floor covering in cars or a tapestry.

According to a second aspect, the invention provides a textile floor covering, manufactured using a method according to the first aspect of the invention or an embodiment thereof.

The invention also provides a textile product, preferably a textile floor covering, preferably manufactured using a method according to the first aspect of the invention or an embodiment thereof, comprising a top layer consisting of a textile fabric or fabric, optionally a primary backing, and a secondary backing, wherein the secondary backing comprises a thermoplastic elastomer (TPE) and particles and/or fibre fragments, wherein the particles and/or fibre fragments have a particle size of between 1 micron and 7.0 mm, preferably between 0.1 and 3.0 mm, and wherein the particles and/or fibre fragments comprise thermoplastic synthetic material selected from the group of polyamides, polyesters or polyolefins, optionally in combination with TPE.

In some preferred embodiments, the textile product, preferably the textile floor covering, comprises:
- a top layer, comprising polyamide, polyester and/or polypropylene yarn, in particular in the form of a textile fabric;
- optionally a primary backing on the basis of polyester, polyamide and/or polypropylene; and,
- a secondary backing which comprises a thermoplastic elastomer and particles and/or fibre fragments.

In some preferred embodiments, the particles and/or fibre fragments consist at least partly of fragmented recycled textile material, such as shearing waste, tuft scraps, yarn scraps, edge trimmings, rejected textile products or rejected textile floor covering.

In some preferred embodiments, the textile product is a carpet, rug or mat, such as a wall-to-wall textile floor covering, a (large) rug, a bathroom mat, a floor covering in cars or a tapestry.

According to a further aspect, the invention provides the use of composite granules for manufacturing a textile floor covering, wherein the composite granules comprise a thermoplastic elastomer (TPE) and particles and/or fibre fragments, wherein the particles and/or fibre fragments have a particle size of between 1 micron and 7.0 mm, preferably between 0.1 and 3.0 mm, and wherein the particles and/or fibre fragments comprise thermoplastic synthetic material selected from the group of polyamides, polyesters or polyolefins, optionally in combination with a thermoplastic elastomer.

Embodiments of one aspect of the invention are also embodiments for other aspects of the invention. Preferred embodiments of one aspect of the invention are also preferred embodiments for other aspects of the invention.

### DESCRIPTION OF THE FIGURES

**FIG. 1** shows a diagrammatic overview of an embodiment of the method according to the present invention.
**FIGS. 2A and 2B** show composite granules comprising 25% shearing waste.
**FIG. 3** shows a secondary carpet backing which is made on the basis of the composite granules as illustrated in **FIGS. 2A and 2B****.**
**FIG. 4** shows an object which was made by injection-moulding on the basis of the composite granules as illustrated in **FIGS. 2A and 2B****.**

### DETAILED DESCRIPTION

As used below in this text, the singular forms "a", "an", "the" include both the singular and the plural, unless the context clearly indicates otherwise.

The terms "comprise", "comprises" as used below are synonymous with "including", "include" or "contain", "contains" and are inclusive or open and do not exclude additional unmentioned parts, elements or method steps. The terms "comprise", "comprises" include the term "contain".

The enumeration of numeric values by means of ranges of figures comprises all values and fractions in these ranges, as well as the cited end points.

The term "approximately" as used when referring to a measurable value, such as a parameter, an amount, a time period, and the like, is intended to include variations of +/-10% or less, preferably +/-5% or less, more preferably +/-1% or less, and still more preferably +/-0.1% or less, of and from the specified value, in so far as the variations apply to the invention disclosed herein. It should be understood that the value to which the term "approximately" refers per se has also been disclosed.

All references cited in this description are hereby deemed to be incorporated in their entirety by way of reference.

Unless defined otherwise, all terms disclosed in the invention, including technical and scientific terms, have the meaning which a person skilled in the art usually gives them. For further guidance, definitions are included to further explain terms which are used in the description of the invention.

The present invention and/or preferred embodiments thereof relate to a method for manufacturing a textile product, in particular a textile floor covering, and the textile product or textile floor covering obtained through this method, and provides the use of composite granules, in particular granules comprising recycled textile waste products, in manufacturing the textile product or textile floor covering, in particular in manufacturing a secondary backing of such a textile product or textile floor covering.

The term "textile product" refers in general to a laminated textile product, such as a textile floor covering, comprising a top layer, optionally a middle layer (or primary backing), and a bottom layer (or secondary backing).

The term "textile floor covering" refers in general to soft flooring or textile-based floor covering, in particular a rather thick floor covering with upright pile, for example a carpet. Textile floor covering may be glued to the floor (for example wall-to-wall) or may be loose. Preferably, the floor covering according to the invention is not glued to the floor (for example non-glued floor coverings such as mats and rugs). This is possible due to the good anti-slip properties of the floor covering according to the invention. In certain embodiments, the textile floor covering is a carpet, rug or mat, such as a wall-to-wall textile floor covering, a (large) rug, a bathroom mat, a floor covering in cars or a tapestry.

The top layer comprises a fabric (such as a woven textile fabric) of a tufted textile fabric.

A first aspect, covered by the claimed invention, of the present invention relates to a method for manufacturing a textile floor covering. Preferably the textile floor covering comprises a secondary backing on the basis of composite granules comprising a thermoplastic elastomer matrix.

A method, covered by the claimed invention, for manufacturing a textile floor covering according to the present invention preferably comprises the steps:
a) providing or manufacturing composite granules, as specified herein; and,
b) manufacturing the textile floor covering or a part of the textile floor covering, preferably manufacturing a TPE-based secondary backing on one side of a fabric, on the basis of the composite granules as specified herein,

wherein the composite granules comprise a thermoplastic elastomer (TPE) and particles and/or fibre fragments, preferably fibre fragments;
wherein the particles and/or fibre fragments have a particle size of between 1 micron and 7.0 mm, preferably between 0.1 and 3.0 mm;
wherein the particles and/or fibre fragments comprise thermoplastic synthetic material selected from the group of polyamides, polyesters or polyolefins, optionally in combination with TPE; and,
   wherein step a) comprises the following substeps, in this sequence:
   a1) providing a thermoplastic elastomer (TPE), preferably SEBS or SBS or a polyolefin, wherein the TPE is provided as granules comprising an oil, such as a mineral oil;
   a2) adding and mixing in chalk; and,
   a3) adding and mixing in the particles and/or fibre fragments, preferably fibre fragments.
or, in other words,
   adding composite granules as specified herein, in particular a composition comprising composite granules as specified herein, in the textile floor covering, preferably on one side of a fabric to manufacture a TPE-based secondary backing.

The composite granules according to the present invention comprise a thermoplastic elastomer (TPE) and particles and/or fibre fragments, wherein the particles and/or fibre fragments comprise a thermoplastic synthetic material, in particular selected from the group of polyamides, polyesters or polyolefins, optionally in combination with a thermoplastic elastomer. The particles and/or fibre fragments have a particle size of between 1 micron and 7.0 mm, preferably between 0.1 and 3.0 mm, such as between 0.1 and 2.5 mm or between 0.1 and 2.0 mm. The smaller the particle size, the better the anti-slip properties. The present invention also allows provision of a thinner, lighter and thus less expensive layer.

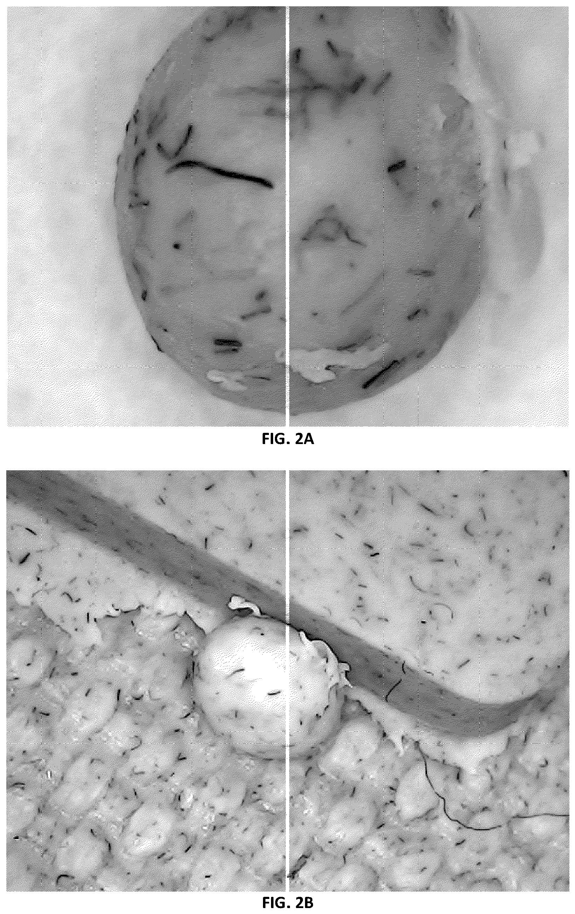

The above makes it clear that the granules comprise both a thermoplastic elastomer (TPE) and the particles and/or fibre fragments as two separate ingredients which together form granules. The particles and/or fibre fragments in turn comprise a thermoplastic synthetic material, optionally in combination with a thermoplastic elastomer. The granules thus comprise, for example, recycled particles (which may comprise TPE) and separately an additional TPE. Due to the fact that the recycled particles and/or fibre fragments are solid, they can be identified separately from the added TPE. This can clearly be seen in **Figs. 2A** and **2B****.**

The present invention avoids repolymerisation and lowers the cost price. The TPE as such is highly compatible with the individual particles and/or fibre fragments, as a result of which composite granules can quickly be formed. Such a composite ensures that the granules are compatible with a range of other polymers and are suitable for many purposes.

The thermoplastic polymer (TPE) preferably comprises SEBS or SBS or a polyolefin, preferably SEBS or SBS.

In particular, the method also comprises providing a fabric and/or manufacturing a fabric by weaving yarn.

In certain preferred embodiments, covered by the claimed invention, the composite granules comprise TPE and particles and/or fibre fragments wherein the particles and/or fibre fragments comprise comminuted or fragmented textile waste products or recycled textile material, such as shearing waste, tuft scraps, yarn scraps, edge trimmings, rejected textile products or rejected textile floor covering. Reprocessing textile waste products to form secondary backing of new textile products makes it possible to significantly reduce the number of waste streams. In addition, the textile waste products comprise the same materials as a textile product according to the present invention, which enhances and ensures compatibility between the recycling material and the new "virgin" raw materials. In certain embodiments, the method furthermore comprises the step of comminuting or fragmenting textile waste products before manufacturing the composite granules.

In certain preferred embodiments, covered by the claimed invention, a secondary backing on the basis of the composite granules, as specified herein, comprises fibre fragments. Such fibre fragments function as reinforcement means in the TPE backing and thus increase the strength and the durability of the laminated textile products. In addition, the presence of the fibres in the TPE backing is easily detectable, in a visual way, via microscopy, or via chemical analysis.

In particular, the step of manufacturing the composite granules, as specified herein, comprises mechanically mixing in or compounding TPE and the particles and/or fibre fragments, such as in particular by means of an extrusion process. In particular, the composite granules are manufactured by mixing in or compounding TPE and from 1 to 75 vol% of particles and/or fibre fragments, preferably from 5 to 50 vol% of particles and/or fibre fragments, more preferably from 10 to 40 vol% of particles and/or fibre fragments, most preferably approximately 20 vol% of particles and/or fibre fragments. Optionally, additives may be added in certain embodiments during the mechanical mixing in or compounding of TPE and the particles and/or fibre fragments, such as chalk or talc, to increase the specific weight and/or to reduce the costs, or coupling agents to enhance adhesion between the particles and fibre fragments and the TPE-matrix.

Step a) comprises the following substeps, in this sequence:
a1) providing a thermoplastic elastomer (TPE), preferably SEBS or a polyolefin, wherein the TPE is preferably provided as granules comprising an oil, such as a mineral oil;
a2) adding and mixing in chalk; and,
a3) adding and mixing in the particles and/or fibre fragments, preferably fibre fragments.

Surprisingly, the inventors have found that this sequence ensures that the composite granules have improved properties. In addition, this sequence has the advantage that any residual oil is not released by the composite granules.

In certain embodiments, covered by the claimed invention, the composite granules and/or the secondary backing manufactured from these composite granules comprises from 1 to 75% of recycled fibre fragments, more particularly from 5 to 40% of recycled fibre fragments, such as from 15 to 30% or from 20 to 30% of recycled fibre fragments, on the basis of volume %.

In certain embodiments, covered by the claimed invention, the composite granules and/or the secondary backing manufactured from these composite granules comprises from 0.5 to 15% of recycled fibre fragments, more particularly from 1 to 8% of recycled fibre fragments, such as from 2 to 4% or approximately 3% of recycled fibre fragments, on the basis of weight %.

In certain embodiments, covered by the claimed invention, the composite granules and/or the secondary backing manufactured from these composite granules comprises from 0 to 25% of recycled TPE, as derived from cutting scraps or from waste streams of the TPE backing material, more particularly from 5 to 20% of recycled TPE, such as from 5 to 15% of recycled TPE; from 1 to 75% of recycled fibre fragments, more particularly from 5 to 40% recycled fibre fragments, such as from 15 to 30% or from 20 to 30% of recycled fibre fragments, on the basis of volume %.

Disclosed herein but not claimed is also a method for manufacturing a textile product, in particular a textile floor covering, comprising the steps:
i) providing or manufacturing a fabric, such as by weaving a yarn, the yarn in particular being a polyamide, polyester and/or PP yarn;
ii) comminuting or fragmenting, such as by cutting up or grinding textile waste products;
iii) manufacturing composite granules by mechanically mixing in or compounding TPE, the fragmented textile waste products from step b) and, optionally, additives via extrusion; and,
iv) manufacturing a TPE-based secondary backing on one side of a fabric on the basis of the composite granules;

wherein the fragmented textile waste products from step ii) comprise thermoplastic synthetic material, in particular selected from the group of polyamides, polyesters or polyolefins, optionally in combination with a thermoplastic elastomer; and,
wherein the fragmented textile waste products from step ii) have a particle size of between 0.1 and 3.0 mm, such as between 0.1 and 2.5 mm or between 0.1 and 2.0 mm.

Preferably, the result from step iii) is used as a master batch in the production of step iv).

According to another aspect, covered by the claimed invention, the present invention relates to a textile product or textile floor covering, comprising a secondary backing which in turn comprises a thermoplastic elastomer and particles and/or fibre fragments have a particle size of between 1 micron and 7.0 mm, preferably between 0.1 and 3.0 mm, and wherein the particles and/or fibre fragments comprise thermoplastic synthetic material selected from the group of polyamides, polyesters or polyolefins, optionally in combination with TPE, wherein, in particular, the textile product or the textile floor covering is manufactured using a method or an embodiment thereof according to the present invention. In certain preferred embodiments, covered by the claimed invention, the textile product or the textile floor covering is a carpet, rug or mat, such as a wall-to-wall textile floor covering, a (large) rug, a bathroom mat, a floor covering in cars or a tapestry.

In certain embodiments, covered by the claimed invention, a textile product or textile floor covering comprises a top layer consisting of a textile fabric or fabric, optionally a primary backing, and a secondary backing, wherein the secondary backing comprises a thermoplastic elastomer and particles and/or fibre fragments, wherein the particles and/or fibre fragments have a particle size of between 1 micron and 7.0 mm, preferably between 0.1 and 3.0 mm, and wherein the particles and/or fibre fragments comprise thermoplastic synthetic material selected from the group of polyamides, polyesters or polyolefins, optionally in combination with a thermoplastic elastomer.

In certain embodiments, covered by the claimed invention, a textile product or textile floor covering comprises a top layer, such as a textile fabric or fabric, comprising polyamide, polyester and/or PP yarn, optionally a primary backing comprising polyamide, polyester and/or PP, and a secondary backing, wherein the secondary backing comprises a thermoplastic elastomer and particles and/or fibre fragments, wherein the particles and/or fibre fragments have a particle size of between 1 micron and 7.0 mm, preferably between 0.1 and 3.0 mm, and wherein the particles and/or fibre fragments comprise thermoplastic synthetic material selected from the group of polyamides, polyesters or polyolefins, optionally in combination with a thermoplastic elastomer. In preferred embodiments, covered by the claimed invention, the particles and/or fibre fragments consist at least partly of fragmented or comminuted recycled textile material, such as shearing waste, tuft scraps, yarn scraps, edge trimmings, rejected textile products or rejected textile floor covering.

In certain embodiments, covered by the claimed invention, the particles and/or fibre fragments constitute from 1 to 75 vol% of the secondary backing of the textile product or textile floor covering, preferably from 5 to 50 vol%, more preferably from 10 to 40 vol%, most preferably approximately 20 vol%. In certain embodiments, covered by the claimed invention, the particles and/or fibre fragments constitute from 0.5 to 10% by weight of the secondary backing of the textile product or textile floor covering, preferably from 1 to 5% by weight, more preferably from 2 to 4% by weight, most preferably approximately 3% by weight.

A further aspect of the present invention, covered by the claimed invention, relates to the use of composite granules for manufacturing a textile floor covering according to the present invention, wherein the composite granules comprise a thermoplastic elastomer (TPE) and particles and/or fibre fragments, wherein the particles and/or fibre fragments have a particle size of between 1 micron and 7.0 mm, preferably between 0.1 and 3.0 mm, and wherein the particles and/or fibre fragments comprise thermoplastic synthetic material selected from the group of polyamides, polyesters or polyolefins, optionally in combination with a thermoplastic elastomer.

### EXAMPLES

### Example 1

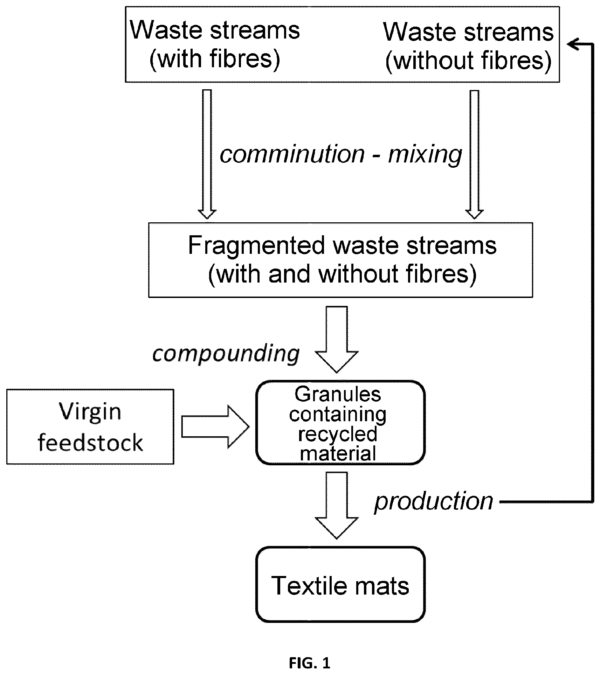

By way of example, an embodiment of a method for manufacturing a textile product is described, as represented in **FIG. 1**, which method comprises recycling of different waste streams (originating from for example the production process) and producing composite granules.

Fibrous production waste streams, such as tuft scraps, yarn scraps, shearing waste and cutting waste are collected and cut up to form fragments and shorter fibres of 0.1-2.0 mm. These fibre scraps are mixed with TPE and compounded to form composite granules comprising 25% (v/v) fibre scraps, in particular via an extrusion process. Examples of such composite granules are illustrated in **FIGS. 2A** and **2B****.**

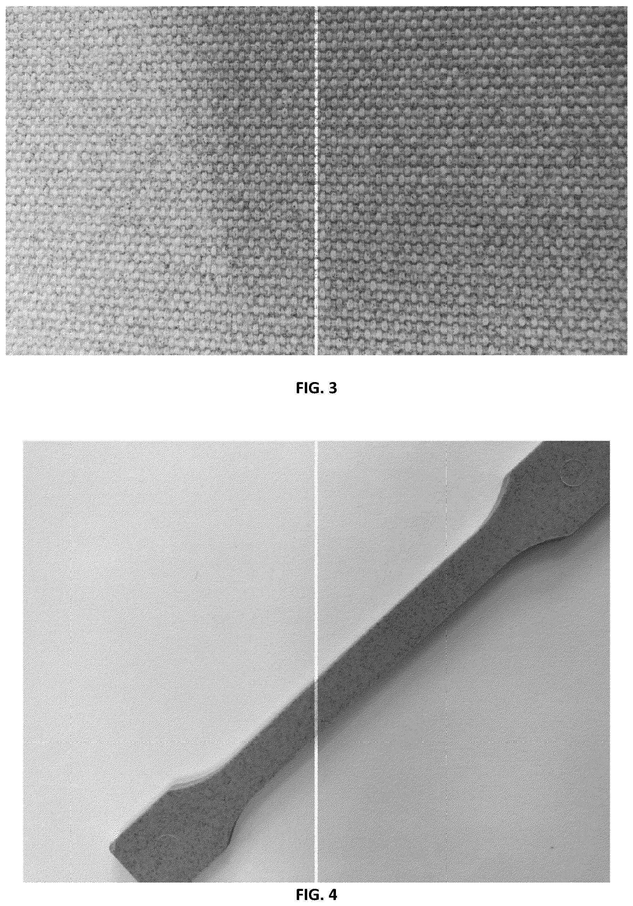

Such composite granules may be used in different applications. In particular, these composite granules may be applied to a carpet as a secondary backing by means of an extruder (**FIG. 3**). The presence of the fibre scraps in the secondary backing is easily detectable, for example visually, by microscopy or by chemical analysis. In addition, the composite granules may also, by injection-moulding, be processed to form a variety of products (**FIG. 4**).

### Example 2

By way of example, an embodiment of a method for manufacturing a textile product as described herein is provided.

Carpet scraps of a carpet consisting of a top layer of nylon (PA) with a primary backing made of 75% PES and 25% PA and a TPE secondary backing, and waste products from the production process of such a carpet (cutting scraps, shearing waste and the like) are comminuted, for example cut into pieces, ground, etc., to a particle size which is as small as possible, such as between 1 micron and 3 mm. These carpet scraps are processed to form composite granules by compounding with TPO and any optional additives. These granules containing recycled material are processed further and laminated to form a secondary backing of a carpet, in particular consisting of a top layer of nylon (PA) with a primary backing made of 75% PES and 25% PA. A typical secondary backing comprising the recycled carpet scraps comprises 20%-25% of recycled fibre fragments. This shows that the waste products from the production process and discarded end products can be processed in their entirety and be recycled to form new carpets.

## Claims

1. Method for manufacturing a textile floor covering, the method comprising the steps:
a) providing or manufacturing composite granules; and,
b) manufacturing the textile floor covering or a part of the textile floor covering on the basis of the composite granules;
wherein the composite granules comprise a thermoplastic elastomer (TPE) and particles and/or fibre fragments, preferably fibre fragments;
wherein the particles and/or fibre fragments have a particle size of between 1 micron and 7.0 mm, preferably between 0.1 and 3.0 mm;
wherein the particles and/or fibre fragments comprise thermoplastic synthetic material selected from the group of polyamides, polyesters or polyolefins, optionally in combination with TPE; and,
wherein step a) comprises the following substeps, in this sequence:
a1) providing a thermoplastic elastomer (TPE), preferably SEBS or SBS or a polyolefin, wherein the TPE is provided as granules comprising an oil, such as a mineral oil;
a2) adding and mixing in chalk; and,
a3) adding and mixing in the particles and/or fibre fragments, preferably fibre fragments.

2. Method according to Claim 1, wherein the thermoplastic elastomer (TPE) comprises SEBS or SBS or a polyolefin.

3. Method according to Claim 1 or 2, wherein step b) comprises manufacturing a secondary backing on one side of a textile floor covering on the basis of the composite granules.

4. Method according to one of the preceding claims, wherein the particles and/or fibre fragments comprise comminuted or fragmented textile waste products or recycled textile material, such as shearing waste, tuft scraps, yarn scraps, edge trimmings, rejected textile products or rejected textile floor covering.

5. Method according to Claim 4, furthermore comprising the step of comminuting or fragmenting textile waste products before manufacturing the composite granules.

6. Method according to one of the preceding claims, wherein the composite granules are manufactured by compounding TPE and the particles and/or fibre fragments, in particular by means of an extrusion process.

7. Method according to one of the preceding claims, wherein the fibre fragments are fibres of polyamide, such as nylon, polyester or polyolefins, such as PP, having a length of 1 micron to 7.0 mm, preferably having a length of 0.1 to 3 mm.

8. Method according to one of the preceding claims, wherein the textile floor covering is a carpet, rug or mat, such as a wall-to-wall textile floor covering, a rug, a bathroom mat, a floor covering in cars or a tapestry.

9. Textile floor covering, manufactured using a method according to one of Claims 1 to 8.

10. Textile floor covering according to Claim 9, comprising a top layer consisting of a textile fabric or fabric, optionally a primary backing, and a secondary backing, wherein the secondary backing comprises a thermoplastic elastomer (TPE) and particles and/or fibre fragments, wherein the particles and/or fibre fragments have a particle size of between 1 micron and 7.0 mm, preferably between 0.1 and 3.0 mm, and wherein the particles and/or fibre fragments comprise thermoplastic synthetic material selected from the group of polyamides, polyesters or polyolefins, optionally in combination with TPE.

11. Textile floor covering according to Claim 9 or 10, comprising:
- a top layer, comprising polyamide, polyester and/or polypropylene yarn, in particular in the form of a textile fabric;
- optionally a primary backing on the basis of polyester, polyamide and/or polypropylene; and,
- a secondary backing which comprises a thermoplastic elastomer and particles and/or fibre fragments.

12. Textile floor covering according to one of Claims 9 to 11, wherein the particles and/or fibre fragments consist at least partly of fragmented recycled textile material, such as shearing waste, tuft scraps, yarn scraps, edge trimmings, rejected textile products or rejected textile floor covering.

13. Textile floor covering according to one of Claims 9 to 12, wherein the textile floor covering is a carpet, rug or mat, such as a wall-to-wall textile floor covering, a rug, a bathroom mat, a floor covering in cars or a tapestry.

14. Use of composite granules for manufacturing a textile floor covering according to one of Claims 9 to 13, wherein the composite granules comprise a thermoplastic elastomer (TPE) and particles and/or fibre fragments, wherein the particles and/or fibre fragments have a particle size of between 1 micron and 7.0 mm, preferably between 0.1 and 3.0 mm, and wherein the particles and/or fibre fragments comprise thermoplastic synthetic material selected from the group of polyamides, polyesters or polyolefins, optionally in combination with a thermoplastic elastomer.

## Patentansprüche

1. Verfahren zur Herstellung eines Textil-Bodenbelags, wobei das Verfahren die Schritte umfasst:
a) Bereitstellen oder Herstellen von Verbundgranulat; und
b) Herstellen des Textil-Bodenbelags oder eines Teils des Textil-Bodenbelags auf der Grundlage des Verbundgranulats;
wobei das Verbundgranulat ein thermoplastisches Elastomer (TPE) und Partikel und/oder Faserfragmente, vorzugsweise Faserfragmente, umfasst;
wobei die Partikel und/oder Faserfragmente eine Partikelgröße von zwischen 1 Mikrometer und 7,0 mm, vorzugsweise zwischen 0,1 und 3,0 mm, aufweisen;
wobei die Partikel und/oder Faserfragmente thermoplastisches synthetisches Material ausgewählt aus der Gruppe von Polyamiden, Polyestern oder Polyolefinen, gegebenenfalls in Kombination mit TPE, umfassen; und
wobei Schritt a) die folgenden Teilschritte in dieser Reihenfolge umfasst:
a1) Bereitstellen eines thermoplastischen Elastomers (TPE), vorzugsweise SEBS oder SBS oder eines Polyolefins, wobei das TPE als Granulat, das ein Öl, wie z.B. ein Mineralöl, umfasst, bereitgestellt wird;
a2) Zugeben und Beimischen von Kreide; und
a3) Zugeben und Beimischen der Partikel und/oder Faserfragmente, vorzugsweise Faserfragmente.

2. Verfahren nach Anspruch 1, wobei das thermoplastische Elastomer (TPE) SEBS oder SBS oder ein Polyolefin umfasst.

3. Verfahren nach Anspruch 1 oder 2, wobei Schritt b) Herstellen eines sekundären Trägers an einer Seite eines Textil-Bodenbelags auf der Grundlage des Verbundgranulats umfasst.

4. Verfahren nach einem der vorstehenden Ansprüche, wobei die Partikel und/oder Faserfragmente zerkleinerte oder fragmentierte Textilabfallprodukte oder recyceltes Textilmaterial, wie z.B. Scherabfall, Tuftreste, Garnreste, Randbeschnitt, verworfene Textilprodukte oder verworfene Textilbodenbeläge, umfassen.

5. Verfahren nach Anspruch 4, ferner umfassend den Schritt des Zerkleinerns oder Fragmentierens von Textilabfallprodukten vor der Herstellung des Verbundgranulats.

6. Verfahren nach einem der vorstehenden Ansprüche, wobei das Verbundgranulat durch Compoundieren von TPE und den Partikeln und/oder Faserfragmenten, insbesondere mithilfe eines Extrusionsverfahrens, hergestellt wird.

7. Verfahren nach einem der vorstehenden Ansprüche, wobei die Faserfragmente Fasern aus Polyamid, wie z.B. Nylon, Polyester oder Polyolefinen, wie z.B. PP, mit einer Länge von 1 Mikrometer bis 7,0 mm, vorzugsweise mit einer Länge von 0,1 bis 3 mm, sind.

8. Verfahren nach einem der vorstehenden Ansprüche, wobei der Textil-Bodenbelag ein Teppich, ein Vorleger oder eine Matte ist, wie z.B. ein Wand-zu-Wand-Textil-Bodenbelag, ein Vorleger, eine Badezimmermatte, ein Bodenbelag in Automobilen oder eine Tapisserie.

9. Textil-Bodenbelag, hergestellt unter Verwendung eines Verfahrens nach einem der Ansprüche 1 bis 8.

10. Textil-Bodenbelag nach Anspruch 9, umfassend eine Deckschicht bestehend aus einem Textilgewebe oder Gewebe, gegebenenfalls einem primären Träger und einem sekundären Träger, wobei der sekundäre Träger ein thermoplastisches Elastomer (TPE) und Partikel und/oder Faserfragmente umfasst, wobei die Partikel und/oder Faserfragmente eine Partikelgröße von zwischen 1 Mikrometer und 7,0 mm, vorzugsweise zwischen 0,1 und 3,0 mm, aufweisen, und wobei die Partikel und/oder Faserfragmente thermoplastisches synthetisches Material ausgewählt aus der Gruppe von Polyamiden, Polyestern oder Polyolefinen, gegebenenfalls in Kombination mit TPE, umfassen.

11. Textil-Bodenbelag nach Anspruch 9 oder 10, umfassend:
- eine Deckschicht umfassend Polyamid-, Polyester- und/oder Polypropylengarn, insbesondere in der Form eines Textilgewebes;
- gegebenenfalls einen primären Träger auf der Basis von Polyester, Polyamid und/oder Polypropylen; und
- einen sekundären Träger umfassend ein thermoplastisches Elastomer und Partikel und/oder Faserfragmente.

12. Textil-Bodenbelag nach einem der Ansprüche 9 bis 11, wobei die Partikel und/oder Faserfragmente wenigstens zum Teil aus fragmentiertem recyceltem Textilmaterial, wie z.B. Scherabfall, Tuftreste, Garnreste, Randbeschnitt, verworfene Textilprodukte oder verworfene Textilbodenbeläge, bestehen.

13. Textil-Bodenbelag nach einem der Ansprüche 9 bis 12, wobei der Textil-Bodenbelag ein Teppich, ein Vorleger oder eine Matte ist, wie z.B. ein Wand-zu-Wand-Textil-Bodenbelag, ein Vorleger, eine Badezimmermatte, ein Bodenbelag in Automobilen oder eine Tapisserie.

14. Verwendung von Verbundgranulat zur Herstellung eines Textil-Bodenbelags nach einem der Ansprüche 9 bis 13, wobei das Verbundgranulat ein thermoplastisches Elastomer (TPE) und Partikel und/oder Faserfragmente umfasst, wobei die Partikel und/oder Faserfragmente eine Partikelgröße von zwischen 1 Mikrometer und 7,0 mm, vorzugsweise zwischen 0,1 und 3,0 mm, aufweisen und wobei die Partikel und/oder Faserfragmente thermoplastisches synthetisches Material ausgewählt aus der Gruppe von Polyamiden, Polyestern oder Polyolefinen, gegebenenfalls in Kombination mit einem thermoplastischen Elastomer, umfassen.

## Revendications

1. Procédé de fabrication d'un revêtement de sol textile, le procédé comprenant les étapes :
a) fourniture ou fabrication de granulés composites ; et,
b) fabrication du revêtement de sol textile ou une partie du revêtement de sol textile à base des granulés composites ;
dans lequel les granulés composites comprennent un élastomère thermoplastique (TPE) et des particules et/ou fragments de fibres, de préférence des fragments de fibres ;
dans lequel les particules et/ou fragments de fibres ont une taille de particule comprise entre 1 micron et 7,0 mm, de préférence entre 0,1 et 3,0 mm ;
dans lequel les particules et/ou fragments de fibre comprennent un matériau synthétique thermoplastique choisi dans le groupe des polyamides, des polyesters ou des polyoléfines, éventuellement en combinaison avec un TPE ; et,
dans lequel l'étape a) comprend les sous-étapes suivantes dans cette séquence :
a1) fourniture d'un élastomère thermoplastique (TPE), de préférence un SEBS ou SBS ou une polyoléfine, le TPE étant fourni sous forme de granulés comprenant une huile, telle qu'une huile minérale ;
a2) ajout et mélange de craie ; et
a3) ajout et mélange dans les particules et/ou fragments de fibres, de préférence les fragments de fibres.

2. Procédé selon la revendication 1, dans lequel l'élastomère thermoplastique (TPE) comprend un SEBS ou SBS ou une polyoléfine.

3. Procédé selon la revendication 1 ou 2, dans lequel l'étape b) comprend la fabrication d'un support secondaire sur une face d'un revêtement de sol textile à base des granulés composites.

4. Procédé selon l'une quelconque des revendications précédentes, dans lequel les particules et/ou fragments de fibres comprennent des déchets textiles broyés ou fragmentés ou une matière textile recyclée, tels que des déchets de cisaillement, des déchets de touffes, des déchets de fils, des rognures de bords, des produits textiles rejetés ou des revêtements de sol textiles rejetés.

5. Procédé selon la revendication 4, comprenant en outre l'étape de broyage ou de fragmentation de déchets textiles avant la fabrication des granulés composites.

6. Procédé selon l'une des revendications précédentes, dans lequel les granulés composites sont fabriqués par compoundage de TPE et des particules et/ou fragments de fibres, en particulier au moyen d'un procédé d'extrusion.

7. Procédé selon l'une des revendications précédentes, dans lequel les fragments de fibres sont des fibres de polyamide, telles que du nylon, du polyester ou des polyoléfines, telles que du PP, ayant une longueur de 1 micron à 7,0 mm, de préférence ayant une longueur de 0,1 à 3 mm.

8. Procédé selon l'une quelconque des revendications précédentes, dans lequel le revêtement de sol textile est une moquette, un tapis ou un mat, tel qu'un revêtement de sol textile mur à mur, un tapis, un tapis de salle de bain, un revêtement de sol dans des voitures ou une tapisserie.

9. Revêtement de sol textile fabriqué en utilisant un procédé selon l'une des revendications 1 à 8.

10. Revêtement de sol textile selon la revendication 9, comprenant une couche supérieure constituée d'un tissu textile ou d'un tissu, éventuellement d'un support primaire, et d'un support secondaire, le support secondaire comprenant un élastomère thermoplastique (TPE) et des particules et/ou fragments de fibres, les particules et/ou fragments de fibres ayant une tailles de particule comprise entre 1 micron et 7,0 mm, de préférence entre 0,1 et 3,0 mm, et dans lequel les particules et/ou fragments de fibre comprennent un matériau synthétique thermoplastique choisi dans le groupe des polyamides, des polyesters ou des polyoléfines, éventuellement en combinaison avec un TPE.

11. Revêtement de sol textile selon la revendication 9 ou 10, comprenant :
- une couche supérieure comprenant un fil de polyamide, de polyester et/ou de polypropylène, notamment sous forme d'un tissu textile ;
- éventuellement un support primaire à base de polyester, polyamide et/ou polypropylène ; et,
- un support secondaire qui comprend un élastomère thermoplastique et des particules et/ou fragments de fibres.

12. Revêtement de sol textile selon l'une quelconque des revendications 9 à 11, dans lequel les particules et/ou fragments de fibres sont constitués au moins partiellement d'un matériau textile recyclé fragmenté, tel que des déchets de cisaillement, des déchets de touffes, des déchets de fils, des rognures de bord, des produits textiles rejetés ou des revêtements de sol textiles rejetés.

13. Revêtement de sol textile selon l'une des revendications 9 à 12, dans lequel le revêtement de sol textile est une moquette, un tapis ou un mat, tel qu'un revêtement de sol textile mur à mur, un tapis, un tapis de salle de bain, un revêtement de sol dans des voitures ou une tapisserie.

14. Utilisation de granulés composites pour la fabrication d'un revêtement de sol textile selon l'une des revendications 9 à 13, dans laquelle les granulés composites comprennent un élastomère thermoplastique (TPE) et des particules et/ou des fragments de fibres, dans laquelle les particules et/ou fragments de fibres ont une taille de particules comprise entre 1 micron et 7,0 mm, de préférence entre 0,1 et 3,0 mm, et dans laquelle les particules et/ou fragments de fibre comprennent un matériau synthétique thermoplastique choisi dans le groupe des polyamides, des polyesters ou des polyoléfines, éventuellement en combinaison avec un élastomère thermoplastique.
